# EUROPÄISCHE PATENTANMELDUNG

(11) **EP 0 635 421 A1**
(43) Veröffentlichungstag der Anmeldung: **25.01.1995**
(21) Anmeldenummer: 94110928.2
(22) Anmeldetag: 13.07.1994
(51) Int. Cl.: B62J 29/00

(54) **Rückspiegel für ein Zweirad**

(30) Priorität: 21.07.1993 DE 4324501
(71) Anmelder: Menz, Erika, D-89257 Illertissen (DE); Von Braun, Franz-Josef, D-80804 München (DE)
(72) Erfinder: Menz, Erika, D-89257 Illertissen (DE)
(74) Vertreter: Müller-Boré & Partner Patentanwälte

(57) **Zusammenfassung**

Offenbart wird ein Rückspiegel für ein Zweirad, der eine zur Befestigung an einem Rohr des Zweirades bestimmte Halterung (2) und einen an der Halterung in deren unmittelbarer Nähe angelenkten Spiegelhalter (4) aufweist, der einen Spiegel (12) trägt, und dadurch gekennzeichnet ist, daß der Spiegel in seinem unteren Randbereich eine Ausnehmung (48) aufweist, die zur Aufnahme des Rohrs dient, wobei die Ausnehmung so bemessen ist, daß in Arbeitsstellung des Rückspiegels die Spiegelfläche beidseits des Rohres nach unten verlängert ist.

## Beschreibung

Die vorliegende Erfindung betrifft einen Rückspiegel für ein Zweirad gemäß dem Oberbegriff des Anspruchs 1. Ein derartiger Rückspiegel ist bereits aus der US-3 981 567 bekannt.

Es sind bereits Zweiräder mit Rückspiegel bekannt, die zwei Rückspiegel aufweisen, die an langen Stangen befestigt jeweils am linken und rechten Ende des Lenkers angebracht werden und von diesem schräg nach außen vorstehen. Eine derartige Anordnung hat den Nachteil, daß die Spiegel bei einem Sturz des Fahrrads beschädigt werden. Ferner kann der unmittelbar axial hinter dem Fahrrad gelegene Bereich nur ungenügend erfaßt werden. Schließlich erhöhen großflächige Spiegel dieser Art den Luftwiderstand nicht unerheblich und kommen auch aus optischen Gründen bei modernen Fahrrädern immer weniger zum Einsatz.

Die gattungsbildende US-3 981 567 zeigt zwar an einem in Arbeitsstellung oberen Rand eines Spiegels eine Ausnehmung, die zur Aufgabe hat, einen störenden Kontakt mit den Stangenelementen des Rahmens zu vermeiden. Der gattungsgemäße Spiegel erlaubt jedoch bei Befestigung an einem Oberrohr keine wirksame Abbildung des unmittelbar unterhalb des Oberrohrs gelegenen rückwärtigen Bereiches hinter dem Zweirad.

Aufgabe der vorliegenden Erfindung ist es, den gattungsgemäßen Rückspiegel derart weiterzubilden, daß bei Befestigung des Rückspiegels an einem Oberrohr auch ein unmittelbar unterhalb des Oberrohrs gelegener rückwärtiger Sichtbereich geeignet abbildbar ist.

Diese Aufgabe wird gelöst durch einen Rückspiegel gemäß Anspruch 1.

Erfindungsgemäß ist angegeben ein Rückspiegel, der konstruktiv besonders einfach aufgebaut ist, da der Abstand zwischen Halterung und Spiegelhalter klein ist und dadurch Verbindungsstreben zwischen Spiegelhalter und Halterung kurz und damit materialsparend ausgeführt werden können. Durch die Anordnung des Rückspiegels in der Höhe zwischen Hinterrad und Sattel kann der Rückspiegel den gesamten insbesondere axial hinter dem Fahrrad gelegenen Bereich abbilden, und zwar in einem Strahlengang, der seitlich durch die Beine des Benutzers, oben durch den Sattel und unten durch das Hinterrad begrenzt ist. Erfindungsgemäß weist der Spiegel an seinem unteren Rand eine Ausnehmung auf, die so ausgebildet ist, daß ein Rohr, an dem die Halterung befestigt ist, durch sie hindurchgreifen kann. Der an der Halterung befestigte Spiegelhalter trägt einen Spiegel, der somit an seiner unteren Kante eine an das Rohr angepaßte bevorzugt halbkreisförmige Ausnehmung aufweist. Wenn der Spiegel so gekippt wird, daß sich das Rohr durch die Ausnehmung erstreckt, ist die Spiegelebene beidseits des Rohrs weiter nach unten erstreckt, so daß ein tiefergelegener Bereich hinter dem Zweirad abgebildet werden kann. Ferner dient die Ausnehmung als wirksame Abstützung des Spiegels am Rohr.

Es ist bevorzugt, daß die Halterung mit dem Spiegelhalter durch ein Kugelgelenk verbunden ist. Eine derartige Verbindung empfiehlt sich, um den Spiegelhalter in einer beliebigen Position zur Halterung einstellen zu können. Damit kann Rücksicht genommen werden auf verschiedene geometrische Abmessungen von Zweirädern und entsprechende Körpergrößen von Benutzern.

Es ist ferner bevorzugt, daß der Spiegel eine Breite hat, die etwa der Länge einer Tretkurbelwelle entspricht. An den jeweiligen Enden der Tretkurbelwelle sind senkrecht Tretstangen angebracht, die sich etwa in der Ebene der Beine des Benutzers befinden. Wenn der Spiegel etwa die Länge der Tretkurbelwelle abdeckt, überdeckt er etwa den Bereich, der zwischen den Beinen des Benutzers als Sichtbereich nach hinten freigegeben wird und damit erfaßt der Spiegel den maximal zugänglichen Rücksichtbereich.

Es ist bevorzugt, daß die Ausnehmung zumindest 35% der Längsabmessung der Spiegelfläche einnimmt. Damit ist eine ausreichende beidseitige Verlängerung der Spiegelfläche über das Rohr möglich.

Es ist ferner bevorzugt, daß die Halterung als Clip ausgebildet ist, der auf das Rohr aufgesteckt bzw. aufgesetzt wird. Dadurch läßt sich der Rückspiegel einfach montieren und demontieren.

Es ist bevorzugt, daß der Spiegel in der Arbeitsposition eine Neigung von etwa 30° bis 60°, besonders bevorzugt etwa 40° bis 50° zur Horizontalen aufweist. Bei einem Winkel von 45° kann der unmittelbar hinter dem Zweirad befindliche Bereich erfaßt werden, wenn der Fahrer senkrecht von oben auf den Spiegel hinunterblickt. In einem Bereich von +/- 5° bzw. 10° um diese Position herum liegt die bevorzugte Arbeitsposition des Rückspiegels.

Bei einem Herrenfahrrad ist die Halterung des Rückspiegels bevorzugt an einem Oberrohr angebracht. An diesem Rohr läßt sich die Halterung geeignet verschieben und in die richtige Position für den Benutzer bringen.

Alternativ ist bei einem Damenfahrrad bevorzugt, die Halterung an einem Steuerrohr oder Unterrohr zu befestigen, wenn ein Oberrohr nicht vorhanden ist.

Schließlich ist die Halterung alternativ an einem Lenkerrohr bzw. Lenkervorbau befestigt, wenn eine Veränderung des Rücksichtbereichs des Rückspiegels in Abhängigkeit von einem Lenkwinkel gewünscht ist. Wenn das Zweirad in eine Rechtskurve fährt, ist der Rücksichtbereich bezüglich des Benutzers nach links verschoben und umgekehrt.

Schließlich ist bevorzugt, daß der Spiegel gewölbt ist, und zwar aus einer quer zum Gestell des Fahrrads gelegenen Querebene heraus, so daß auch die weiter links und weiter rechts hinter dem Benutzer gelegenen Sichtbereiche erfaßt werden können.

Die Erfindung wird nachstehend anhand eines Ausführungsbeispiels in Verbindung mit der Zeichnung beschrieben.

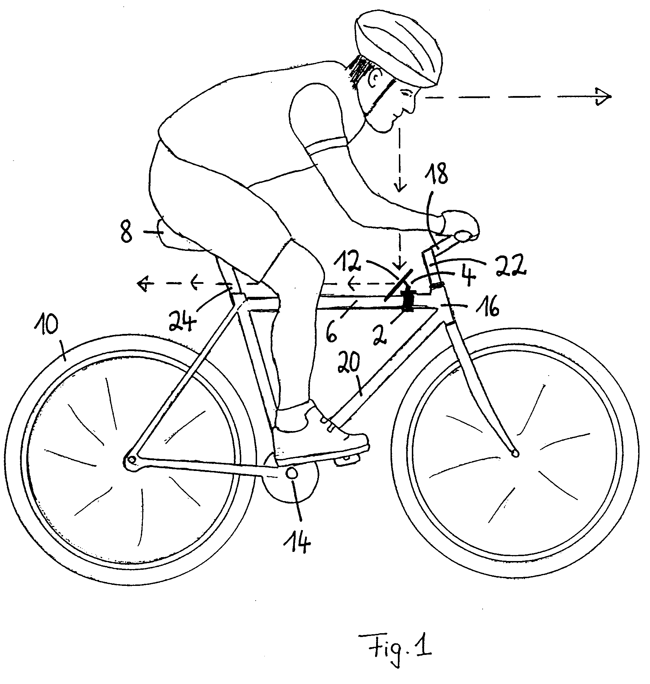

Fig. 1 zeigt eine Seitenansicht einer Ausführungsform des erfindungsgemäßen Rückspiegels an einem Zweirad.

Fig. 2 zeigt eine Rückansicht der Ansicht von Fig. 1.

Fig. 3 zeigt perspektivisch einen Aufbau des Rückspiegels.

Fig. 4 zeigt perspektivisch einen anderen Aufbau des Rückspiegels.

Fig. 5 zeigt eine Aufsicht auf den Rückspiegel von Fig. 4.

Fig. 6a zeigt einen Rückspiegel mit abgewinkelten Endabschnitten im Querschnitt.

Fig. 6b zeigt einen ebenen Rückspiegel im Querschnitt.

Fig. 6c zeigt einen gewölbten Rückspiegel im Querschnitt.

In den Figuren ist ein gewöhnliches Herrenfahrrad mit einem Oberrohr 6 gezeigt, an dem eine in Form einer Schelle ausgebildete Halterung 2 eines Rückspiegels befestigt ist. Die Halterung 2 ist als Clip ausgebildet und wird in einem in der Nähe des Vorderrads befindlichen vorderen Bereich des Oberrohrs 6 auf dieses aufgesteckt.

An der als Clip ausgebildeten Halterung 2 des Rückspiegels ist mittels eines Kugelgelenks 44, 46 ein Spiegelhalter 4 angelenkt, der an seiner Außenseite den eigentlichen Spiegel 12 trägt.

Der Spiegel ist in seiner Arbeitsposition bevorzugt in einem Winkel von etwa 30° bis 60° zum Oberrohr 6 angeordnet, besonders bevorzugt etwa 45°. In dieser Position kann ein senkrecht über dem Spiegel befindlicher Kopf eines Benutzers den unmittelbar hinter dem Fahrrad befindlichen Bereich visuell erfassen. Der Clip ist im vorderen Bereich des Oberrohrs in einem Abstand von höchstens 40 cm von einem Steuerrohr 16 angebracht. Das Steuerrohr 16 ist am vorderen Ende des Oberrohrs 6 mit diesem verbunden. Bevorzugt jedoch ist die Halterung 2 des Rückspiegels in einem Bereich von 5 cm bis 15 cm Abstand von dem Steuerrohr 16 angebracht.

Der durch Halterung 2, Spiegelhalter 4 und Spiegel 12 gebildete Rückspiegel ist auf einer Höhe zwischen Sattel 8 und Hinterrad 10 angeordnet, so daß ein zwischen diesen freigegebener Sichtbereich erfaßbar ist. Genauer gesagt befindet sich der am Oberrohr 6 befestigte Rückspiegel auf der Höhe einer Sattelstütze 24, die an ihrem oberen Ende den Sattel 8 trägt.

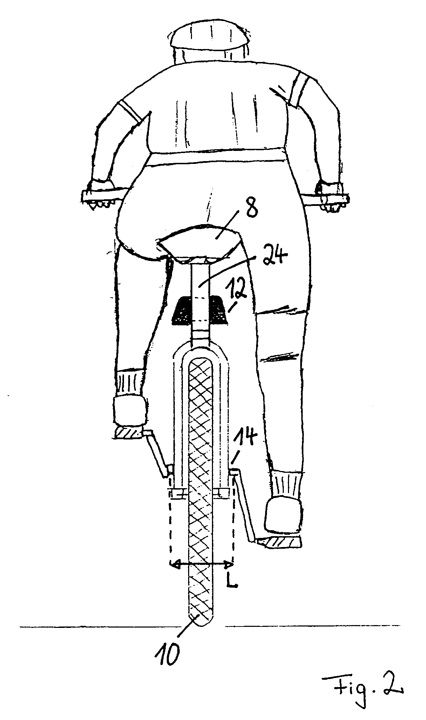

Wie in Fig. 2 zu erkennen, hat der Spiegel 12 im wesentlichen rechteckige Form und eine Breite, die in etwa der Länge einer Tretkurbelwelle 14 entspricht. Auf diese Weise ist sichergestellt, daß der Spiegel den gesamten zwischen den Beinen des Benutzers freien Bereich ausnutzt.

Alternativ kann die Halterung 2 des Rückspiegels an dem Steuerrohr 16 oder einem Unterrohr 20 befestigt werden, insbesondere bei Damenfahrrädern. Ferner kann die Halterung 2 an einem Lenkerrohr 22 oder Lenkervorbau 18 befestigt werden, wenn erwünscht ist, daß sich der Rücksichtsbereich in Abhängigkeit vom Lenkwinkel ändert.

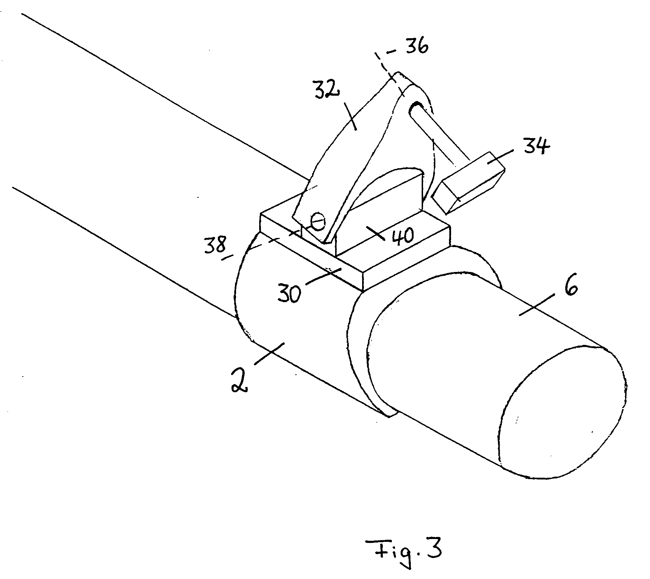

Fig. 3 zeigt perspektivisch einen Aufbau einer Ausführungsform von Halterung und Spiegelhalter des Rückspiegels, wobei eine Schwenkachse 36 und eine Kippachse 38 des Rückspiegels voneinander getrennt sind. Auf der Halterung 2 ist eine flache Halteplatte 30 befestigt, die einen quaderförmigen Halteaufsatz 40 trägt, in dem quer zum Rohr 6 eine Bohrung gebildet ist. Die Bohrung dient zur Aufnahme einer Achse 38 eines etwa hufeisenförmigen Kippgelenks 32, das um die Achse 38 kippbar am Halteaufsatz 40 und somit an der Halterung 2 gelagert ist. Am oberen Ende des Kippgelenks 32 befindet sich eine in Querrrichtung zur Achse 38 gelegene Bohrung, die zur Aufnahme eines Schwenkteils 34 bestimmt ist. Das Schwenkteil 34 weist eine längliche Schwenkachse 36 auf, die in der Bohrung des Kippgelenks 32 schwenkbar gelagert ist. Das Schwenkteil 34 hat einen verstärkten flachen Kopfteil, an dem der Spiegel 12 zu befestigen ist. Durch Schwenkachse 36 und Kippachse 38 läßt sich der Spiegel 12 in eine beliebige Stellung bringen.

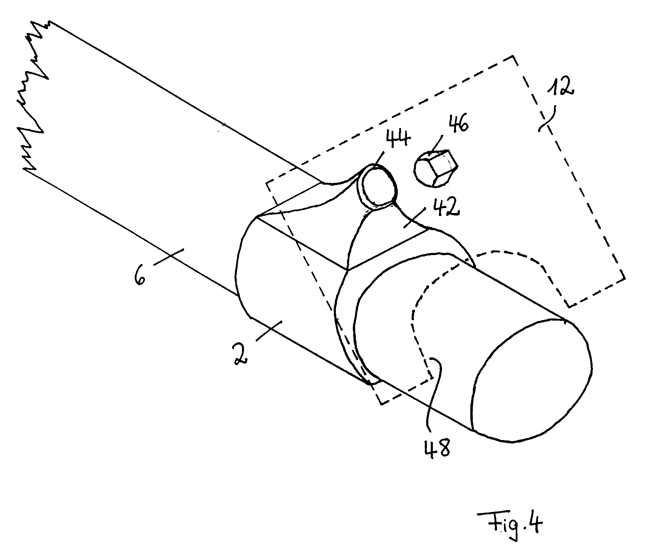

Die in Fig. 4 perspektivisch gezeigte weitere Ausführungsform des Rückspiegels weist einen auf der Halterung 2 an deren Oberseite befestigten Pfannenhalter 42 auf, der sich nach oben verjüngt und mit einer Pfanne 44 abschließt, die schräg am Pfannenhalter 42 gebildet ist. Die Pfanne 44 ist Teil eines Kugelgelenks und dient zur Aufnahme eines Kugelkopfs 46, an dessen Hinterseite unmittelbar der Spiegel 12 befestigt ist. Der mit dem Kugelkopf 46 in die Pfanne 44 eingesetzte Spiegel 12 ist in alle Richtungen verschieblich, d.h. kippbar und schwenkbar. Im unteren Randbereich des Spiegels 12 ist eine Ausnehmung 48 entsprechend dem Rohr 6 gebildet, durch die sich das Rohr hindurch erstreckt und den Spiegel 12 abstützt. Gleichzeitig verlängert sich der Spiegel 12 bei Auflage an dem Rohr 6 beidseits des Rohrs nach unten, so daß ein größerer Sichtbereich insbesondere im unteren Bereich hinter dem Fahrer erfaßbar ist.

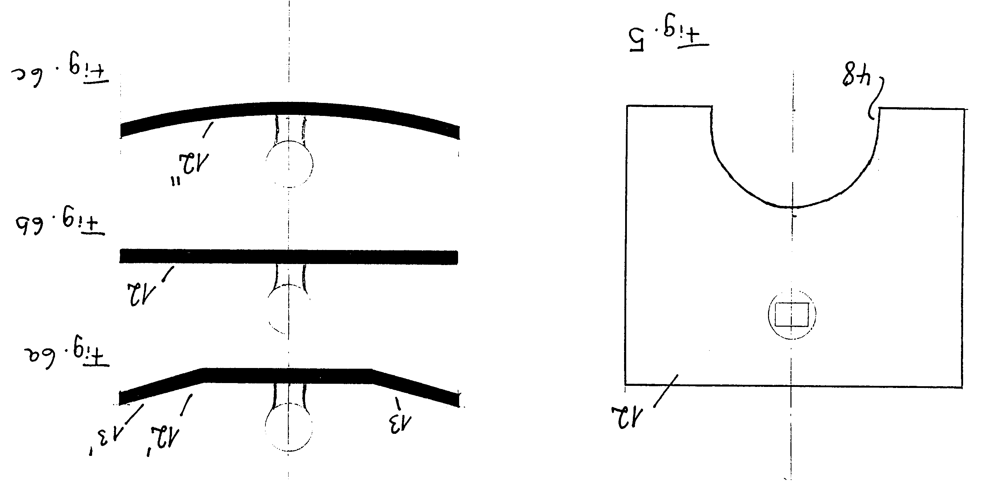

Fig. 5 zeigt eine Aufsicht auf den Spiegel von Fig. 4. Die Ausnehmung 48 ist im Querschnitt etwa halbkreisförmig und mittig im unteren Bereich des Spiegels gelegen. Sie nimmt in Längsrichtung etwa 40% und in Querrichtung etwa 50% der Spiegelfläche ein.

Fig. 6a zeigt im Querschnitt einen Spiegel mit abgewinkelten Randabschnitten 13 bzw. 13', die in einem stumpfen Winkel an den Mittelteil des Spiegels 12' grenzen.

Fig. 6b zeigt einen ebenen bzw. nicht gewölbten oder abgeschrägten Spiegel 12, der plan in einer Ebene liegt.

Fig. 6c zeigt einen gewölbten Spiegel 12' im Querschnitt, wobei die Wölbung im Querschnitt Teil eines Kreissegmentes ist. In dieser Ausführungsform lassen sich insbesondere die hinter dem Fahrrad beidseits weiter entfernt gelegenen Bereiche erfassen. Der Spiegel 12'' wirkt in Form eines Weitwinkels.

## Patentansprüche

1. Rückspiegel für ein Zweirad, der eine zur Befestigung an einem Rohr des Zweirades bestimmte Halterung (2) und einen an der Halterung in deren unmittelbarer Nähe angelenkten Spiegelhalter (4) aufweist, der einen Spiegel (12) trägt, dadurch gekennzeichnet, daß der Spiegel in seinem unteren Randbereich eine Ausnehmung (48) aufweist, die zur Aufnahme des Rohres dient, wobei die Ausnehmung so bemessen ist, daß in Arbeitsstellung des Rückspiegels die Spiegelfläche beidseits des Rohres nach unten verlängert ist.

2. Rückspiegel nach Anspruch 1, dadurch gekennzeichnet, daß die Halterung (2) mit dem Spiegelhalter (4) durch ein Kugelgelenk (44, 46) verbunden ist.

3. Rückspiegel nach Anspruch 1 oder 2, dadurch gekennzeichnet, daß der Spiegel (12) eine Breite hat, die etwa der Länge (L) einer Tretkurbelwelle (14) entspricht.

4. Rückspiegel nach einem der Ansprüche 1 bis 3, dadurch gekennzeichnet, daß die Ausnehmung (48) zumindest 35 % der Längsabmessung der Spiegelfläche einnimmt.

5. Rückspiegel nach einem der vorhergehenden Ansprüche, dadurch gekennzeichnet, daß die Halterung (2) als Clip ausgebildet ist, der auf das Rohr aufgesteckt bzw. aufgesetzt wird.

6. Rückspiegel nach einem der vorhergehenden Ansprüche, dadurch gekennzeichnet, daß der Spiegel in der Arbeitsposition eine Neigung von etwa 30° bis 60°, bevorzugt etwa 40° bis 50° zur Horizontalen aufweist.

7. Rückspiegel nach einem der vorhergehenden Ansprüche, dadurch gekennzeichnet, daß die Halterung (2) an einem Oberrohr (6) des Zweirads befestigbar ist.

8. Rückspiegel nach einem der Ansprüche 1 bis 6, dadurch gekennzeichnet, daß die Halterung (2) an einem Steuerrohr (16) oder Unterrohr (20) befestigbar ist.

9. Rückspiegel nach einem der Ansprüche 1 bis 6, dadurch gekennzeichnet, daß die Halterung (2) an einem Lenkerrohr (22) oder Lenkervorbau (18) befestigbar ist.

10. Rückspiegel nach einem der vorhergehenden Ansprüche, dadurch gekennzeichnet, daß der Spiegel (12) gewölbt ist.
